(19) Europäisches Patentamt
European Patent Office
Office européen des brevets

(11) **EP 4 386 673 A1**

(12) **DEMANDE DE BREVET EUROPEEN**

(43) Date de publication:
**19.06.2024 Bulletin 2024/25**

(21) Numéro de dépôt: **23217075.3**

(22) Date de dépôt: **15.12.2023**

(51) Classification Internationale des Brevets (IPC):
**G06T 7/269** (2017.01)

(52) Classification Coopérative des Brevets (CPC):
**G06T 7/269;** G06N 3/045; G06N 3/0464;
G06T 2207/20081; G06T 2207/20084

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **16.12.2022 FR 2213565**

(71) Demandeurs:
• **COMMISSARIAT À L'ÉNERGIE ATOMIQUE ET
AUX
ÉNERGIES ALTERNATIVES
75015 Paris (FR)**
• **SORBONNE UNIVERSITE
75006 Paris (FR)**

(72) Inventeurs:
• **MARSAL, Rémi
91191 GIF-SUR-YVETTE CEDEX (FR)**
• **CHABOT, Florian
91191 GIF-SUR-YVETTE CEDEX (FR)**
• **LOESCH, Angélique
91191 GIF-SUR-YVETTE CEDEX (FR)**
• **DUPONT, Camille
91191 GIF-SUR-YVETTE CEDEX (FR)**
• **SAHBI, Hichem
75005 PARIS (FR)**

(74) Mandataire: **Atout PI Laplace
Immeuble Up On
25 Boulevard Romain Rolland
CS 40072
75685 Paris Cedex 14 (FR)**

(54) **MÉTHODE D'APPRENTISSAGE NON SUPERVISÉ D'UN MODÈLE D'ESTIMATION DE FLUX OPTIQUE**

(57)    Méthode, mise en oeuvre par ordinateur, d'apprentissage non supervisé d'un modèle de flux optique à partir d'une séquence d'images, la méthode comprenant l'apprentissage conjoint d'un premier modèle d'apprentissage automatique configuré pour estimer le flux optique $F_1, F_2$ entre deux images successives et d'un second modèle d'apprentissage automatique configuré pour estimer une différence d'intensité lumineuse $C_1, C_2$ entre les pixels correspondants des deux images successives, l'apprentissage conjoint étant réalisé par optimisation d'au moins une première fonction de cout $L_{ph1}$ caractéristique d'une erreur entre la première image $I_1$ d'un couple d'images successives $I_1, I_2$ et une version reconstituée $\widehat{I_1^c}$ de la première image $I_1$ obtenue en :
- Appliquant la différence d'intensité lumineuse $C_2$ estimée entre la seconde image $I_2$ et la première image $I_1$, à la seconde image $I_2$, de manière à obtenir une seconde image $I_2^c$ compensée de la différence d'intensité lumineuse $C_2$,
- Appliquant l'estimée du flux optique $F_1$ entre la première image $I_1$ et la seconde image $I_2$ à la seconde image $I_2^c$

compensée, de manière à obtenir la version reconstituée $\widehat{I_1^c}$ de la première image $I_1$.

FIG.4

**Description**

L'invention concerne le domaine de la vision par ordinateur et en particulier les méthodes d'estimation du flux optique pour une séquence d'images. L'invention concerne également le domaine de l'apprentissage profond, en particulier l'apprentissage non supervisé.

L'invention porte sur une nouvelle méthode d'apprentissage non supervisé d'un modèle d'estimation de flux optique.

Dans le domaine de la vision par ordinateur, une tâche couramment mise en oeuvre concerne l'estimation du flux optique. La mesure du flux optique consiste à estimer le mouvement relatif de chaque pixel dans une scène donnée entre plusieurs instants successifs. Autrement dit, le flux optique correspond au déplacement de chaque pixel appartenant à un objet d'une scène entre deux images successives.

L'estimation de la fonction de flux optique est une fonction courante dans le domaine du traitement d'images, de la vision par ordinateur afin de mettre en oeuvre des fonctionnalités de détection de mouvement ou de segmentations d'objets en mouvement par rapport à l'arrière-plan ou d'autres techniques de traitement vidéo, par exemple de suivi d'objets ou de détection d'anomalies.

Les méthodes traditionnelles d'estimation du flux optique sont basées sur des problèmes d'optimisation. Cependant des méthodes plus récentes se basent sur des approches d'apprentissage profond qui requièrent l'entrainement d'un réseau de neurones artificiels sur un ensemble de données d'apprentissage.

Le principe des méthodes d'estimation de flux optique par apprentissage machine consiste en l'apprentissage d'une fonction qui minimise une fonction de cout caractéristique d'une erreur entre un flux optique estimé et une vérité terrain. On parle d'apprentissage supervisé lorsque la fonction de coût prend en argument la vérité terrain du flux optique.

Les méthodes d'apprentissage supervisé nécessitent un grand nombre de données d'entrainement pour définir la vérité terrain. Un inconvénient de ces méthodes est qu'il est difficile de générer des données d'entrainement accompagnées de la vérité terrain du flux optique, c'est-à-dire des données annotées avec la valeur réelle du flux optique. En effet, l'annotation de séquences vidéo pour générer des données d'entrainement associées à la vérité terrain du flux optique est un processus très coûteux.

Il existe également des méthodes d'apprentissage non supervisé qui ne nécessitent pas de connaitre la vérité terrain du flux optique. Ces méthodes présentent une alternative permettant de résoudre le problème de l'annotation des données d'entrainement pour fournir la vérité terrain du flux optique ou autrement dit le problème d'obtention de la vérité terrain du flux optique associée aux couples d'images des données d'entrainement

Ces méthodes sont basées sur l'optimisation d'une fonction d'erreur dite photométrique qui vise à comparer une image avec sa reconstruction à partir de l'image successive à laquelle est appliquée la fonction de flux optique permettant le déplacement des pixels pour revenir à l'image d'origine. La référence [1] donne un exemple d'une telle méthode.

Un inconvénient de cette méthode est qu'elle n'est pas totalement robuste aux changements d'intensité lumineuse entre deux images successives. Ainsi, un pixel appartenant au même objet dans deux images successives peut être affecté d'un changement d'intensité qui peut être lié à une ombre, une réflexion, ou encore un changement d'orientation du capteur.

Ces changements d'intensité peuvent fausser l'estimation du flux optique et il existe donc un besoin pour une nouvelle méthode d'apprentissage automatique non supervisé qui soit plus robuste aux changements d'intensité entre deux images successives.

L'invention est basée sur l'apprentissage conjoint de deux modèles d'apprentissage, le premier étant dédié à l'apprentissage du flux optique tandis que le second est dédié à l'apprentissage d'une carte de changements d'intensité entre pixels correspondants de deux images successives. Les changements d'intensité appris peuvent ainsi être pris en compte pour corriger la fonction de perte du modèle d'apprentissage destiné au flux optique.

L'invention porte sur une méthode, mise en oeuvre par ordinateur, d'apprentissage non supervisé d'un modèle de flux optique à partir d'une séquence d'images, la méthode comprenant l'apprentissage conjoint d'un premier modèle d'apprentissage automatique configuré pour estimer le flux optique $F_1, F_2$ entre deux images successives et d'un second modèle d'apprentissage automatique configuré pour estimer une différence d'intensité lumineuse $C_1, C_2$ entre les pixels correspondants des deux images successives, l'apprentissage conjoint étant réalisé par optimisation d'au moins une première fonction de cout $L_{ph1}$ caractéristique d'une erreur entre la première image $I_1$ d'un couple d'images successives

$I_1, I_2$ et une version reconstituée $\widehat{I_1^c}$ de la première image $I_1$ obtenue en :

- Appliquant la différence d'intensité lumineuse $C_2$ estimée entre la seconde image $I_2$ et la première image $I_1$, à la

seconde image $I_2$, de manière à obtenir une seconde image $\widehat{I_2^c}$ compensée de la différence d'intensité lumineuse $C_2$,

- Appliquant l'estimée du flux optique $F_1$ entre la première image $I_1$ et la seconde image $I_2$ à la seconde image $\widehat{I_2^c}$ compensée, de manière à obtenir la version reconstituée $\widehat{I_1^c}$ de la première image $I_1$.

Selon un aspect particulier de l'invention, l'apprentissage conjoint est réalisé par optimisation d'une première fonction de cout $L_{ph1}$ caractéristique d'une erreur entre la première image $I_1$ d'un couple d'images successives $I_1,I_2$ et une version reconstituée $\widehat{I_1^c}$ de la première image $I_1$ et d'une seconde fonction de cout $L_{ph2}$ caractéristique d'une erreur entre la seconde image $I_2$ et une version reconstituée $\widehat{I_2^c}$ de la seconde image $I_2$.

Selon un aspect particulier de l'invention, le second modèle d'apprentissage automatique reçoit en entrée l'une des images du couple de deux images successives et une version estimée de ladite image en appliquant l'estimée du flux optique à l'autre image dudit couple.

Selon un aspect particulier de l'invention, le second modèle d'apprentissage automatique reçoit en entrée une carte d'occlusions $O_1,O_2$ identifiant, pour chaque image du couple d'images successives, les pixels également visibles dans l'autre image dudit couple et l'au moins une première fonction de coût est pondérée par la carte d'occlusions.

Selon un aspect particulier de l'invention, l'au moins une première fonction de coût $L_{ph1}$ est décomposée en un premier terme $L^f_{ph1}$ spécifiquement dédié à l'optimisation du premier modèle d'apprentissage automatique du flux optique et d'un second terme $L^c_{ph1}$ spécifiquement dédié à l'optimisation du second modèle d'apprentissage automatique de la différence d'intensité lumineuse,

- le premier terme $L^f_{ph1}$ étant caractéristique d'une erreur entre la première image $I_1$ d'un couple d'images successives $I_1,I_2$ et une combinaison de la version reconstituée $\widehat{I_1^c}$ de la première image $I_1$ et d'une version estimée $\widehat{I_1}$ de la première image en appliquant l'estimée du flux optique F1 à la seconde image $I_2$,

- ladite combinaison étant obtenue en sélectionnant, pour chaque pixel, celui de la version reconstituée $\widehat{I_1^c}$ et de la version estimée $\widehat{I_1}$ qui est le plus proche de la première image $I_1$,

- le second terme $L^c_{ph1}$ étant caractéristique d'une erreur entre la première image $I_1$ et la version reconstituée $\widehat{I_1^c}$ de la première image $I_1$.

Selon un aspect particulier de l'invention, le premier modèle d'apprentissage automatique et/ou le second modèle d'apprentissage automatique consistent en au moins un réseau de neurones convolutionnel.

L'invention a aussi pour objet un programme d'ordinateur comportant des instructions pour l'exécution de la méthode selon l'invention, lorsque le programme est exécuté par un processeur.

L'invention a aussi pour objet un support d'enregistrement lisible par un processeur sur lequel est enregistré un programme comportant des instructions pour l'exécution de la méthode selon l'invention, lorsque le programme est exécuté par un processeur.

L'invention a aussi pour objet un dispositif de mesure du flux optique à partir d'une séquence d'images comprenant un capteur d'acquisition d'images et une unité de traitement configurée pour mettre en oeuvre le modèle de flux optique estimé au moyen des étapes de la méthode selon l'invention pour une séquence d'images acquise par ledit capteur.

D'autres caractéristiques et avantages de la présente invention apparaîtront mieux à la lecture de la description qui suit en relation aux dessins annexés suivants.

[Fig. 1] représente un schéma illustrant une méthode d'apprentissage non supervisé d'un flux optique selon l'art antérieur,

[Fig. 2] représente un schéma de principe d'un moteur d'apprentissage non supervisé d'un flux optique selon un mode de réalisation de l'invention,

[Fig. 3] représente un schéma d'un exemple d'architecture d'un moteur d'apprentissage automatique de différences d'intensité selon un mode de réalisation de l'invention,

[Fig. 4] représente un schéma de l'architecture générale de la méthode selon l'invention,

[Fig. 5] représente un schéma d'un dispositif configuré pour exécuter l'invention,

On présente tout d'abord le principe général de l'estimation d'un flux optique par une méthode d'apprentissage non supervisé selon l'art antérieur. Une telle méthode est par exemple décrite dans la référence [5].

On note $T = \{V_i\}_i$ un ensemble de séquences vidéo, chaque séquence vidéo étant une séquence temporelle ordonnée d'images notée $V_i = \{I_t^i\}_t$ où $I_t^i$ est une image de dimensions (H,W,C), H étant la hauteur de l'image, W sa largeur et C le nombre de canaux de l'image. Par exemple, pour une image au format RGB, C est égal à 3.

Les images de l'ensemble T peuvent être réarrangées en l'union d'images consécutives. Si on note $(I_1,I_2)$ un couple d'images consécutives de cet ensemble, l'estimation du flux optique de $I_1$ vers $I_2$ consiste à déterminer la carte du flux optique sous la forme d'une matrice $F_1$, de dimension (H,W,2) qui donne le mouvement relatif en 2D de chaque pixel de $I_1$ par rapport au pixel correspondant dans $I_2$. Cette matrice de flux optique capture les mouvements rigides et non rigides des objets et des capteurs.

Cette fonction peut être estimée par un modèle appris automatiquement, tel qu'un réseau de neurones ou tout autre algorithme d'intelligence artificielle : $\psi_\theta(I_1,I_2) = F_1$, avec $\theta$ les paramètres du modèle ou réseau qui doivent être appris.

Le flux optique $F_1$ peut être estimé dans le sens temporel direct, c'est-à-dire de $I_1$ vers $I_2$ ou dans le sens inverse, c'est-à-dire de $I_2$ vers $I_1$. Dans les deux cas, il s'agit de la même fonction à apprendre du point de vue du réseau de neurones.

En considérant un ensemble d'images non annotées, c'est-à-dire sans vérité terrain permettant de connaitre le flux optique associé, on peut appliquer une méthode d'apprentissage non supervisé pour déterminer une approximation des paramètres optimaux $\theta^*$ du réseau $\psi_\theta$ comme étant ceux qui minimisent une fonction de cout ou fonction d'erreur globale $L(\theta)$ qui peut être formulée via l'équation (1) suivante :

$$L(\theta) = \gamma_{ph}L_{ph1}(\theta) + \gamma_{sm}L_{sm1}(\theta) + \gamma_{self}L_{self1}(\theta) \quad (1)$$

Le premier terme $L_{ph1}(\theta)$ est une fonction d'erreur photométrique,

Le deuxième terme $L_{sm1}(\theta)$ est une fonction d'erreur dite de lissage,

Le troisième terme $L_{self1}(\theta)$ est une fonction d'erreur dite d'auto-supervision,

Les termes $\gamma_{ph}$, $\gamma_{sm}$, $\gamma_{self}$ sont les poids respectifs des trois fonctions.

Chacune des fonctions d'erreur peut être calculée dans le sens temporel direct ou inverse. Par la suite, on présente uniquement le sens temporel direct par souci de simplicité, le sens inverse se déduisant à l'identique.

La fonction d'erreur photométrique est caractéristique d'une erreur entre une image et sa reconstruction obtenue à partir du flux optique estimé. Autrement dit, en appliquant le flux optique $F_1$ à l'image $I_2$, on obtient une image $I_1$ reconstruite désignée $\widehat{I_1}$. La fonction d'erreur photométrique $L_{ph1}(\theta)$ consiste à calculer une erreur entre $I_1$ et $\widehat{I_1}$ au moyen d'une distance prédéfinie, par exemple une distance L1 ou L2 ou encore une distance de type « Census Loss » telle qu'introduite dans la référence [5].

Un inconvénient de la fonction d'erreur photométrique est qu'elle n'est pas suffisamment robuste à tous les types de changements d'intensité qui peuvent intervenir entre l'image $I_1$ et l'image $I_2$, ce qui entraine des modifications d'amplitude sur les pixels qui ne sont pas dus à la fonction de flux optique, c'est-à-dire au simple déplacement des pixels, mais à d'autres causes qui impactent l'amplitude.

Plus précisément, la fonction d'erreur photométrique peut être robuste à certains changements d'intensité en choisissant convenablement une distance appropriée pour comparer les deux images mais cette distance n'est jamais insensible à tous les changements d'intensité lumineuse. Par exemple, une distance L1 ou L2 est sensible à n'importe quel changement d'intensité lumineuse tandis qu'une distance telle que la distance « Census Loss » est robuste à certains changements d'intensité lumineuse localement uniformes mais pas à tous les types de changements d'intensité lumineuse.

Les deux autres fonctions d'erreur $L_{sm1}(\theta)$, $L_{self}(\theta)$ sont optionnelles et peuvent être omises de l'équation (1).

La fonction d'erreur de lissage permet de privilégier le fait que des pixels appartenant au même objet doivent théoriquement présenter le même déplacement local dans le flux optique.

La fonction d'erreur d'auto-supervision adresse la problématique des pixels qui sortent des frontières de l'image entre les deux images successives.

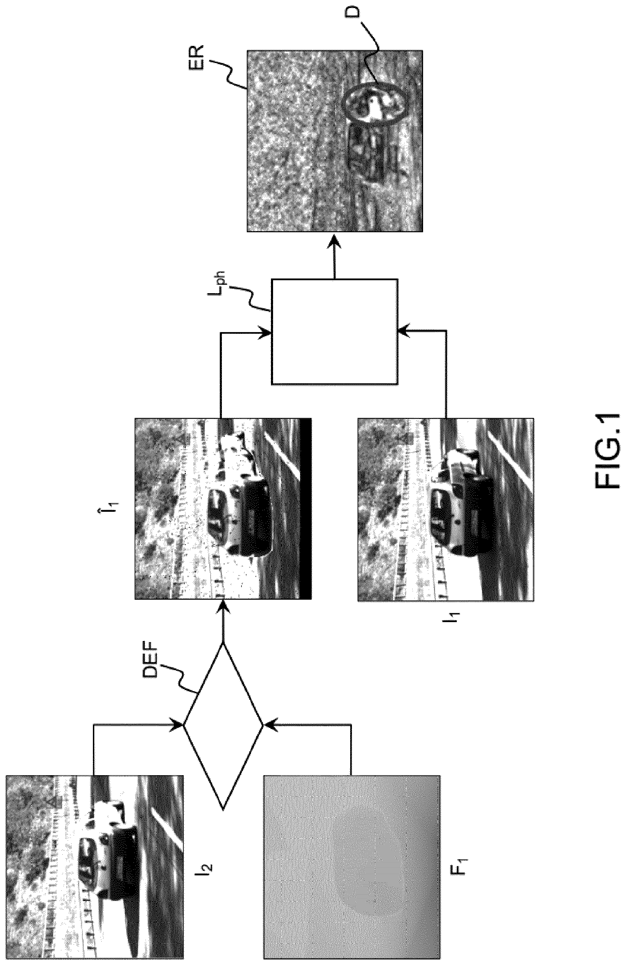

La figure 1 illustre le principe de la méthode selon l'art antérieur décrite ci-dessus. La fonction d'erreur photométrique $L_{ph}$ est calculée à partir d'une erreur entre $I_1$ et $\widehat{I_1}$. Sur l'exemple de la figure 1, les images $I_1, I_2$ correspondent à deux vues successives d'une voiture sur une route. Entre les deux instants de prise de vue, la partie arrière de la voiture est impactée par un changement d'intensité lumineuse dû à une ombre. Ce changement impacte l'erreur de reconstruction ER produite par la fonction d'erreur photométrique $L_{ph}$ en introduisant un défaut D dans la reconstruction.

L'invention vise à améliorer l'apprentissage du modèle de flux optique tel que décrit ci-dessus en introduisant un second modèle des changements d'intensité entre $I_1$ et $I_2$ qui est appris conjointement avec le flux optique. Les changements d'intensité estimés sont pris en compte dans la fonction d'erreur photométrique afin de les corriger. Un avantage de la méthode proposée est qu'elle permet d'éviter que la fonction d'erreur photométrique détecte des erreurs liées à des changements d'intensité comme étant dues à une mauvaise estimation du flux optique.

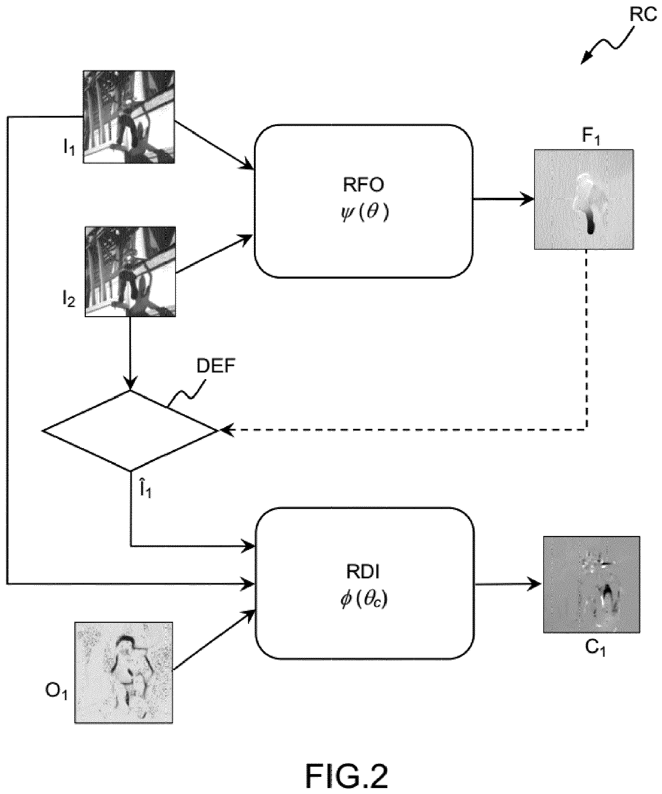

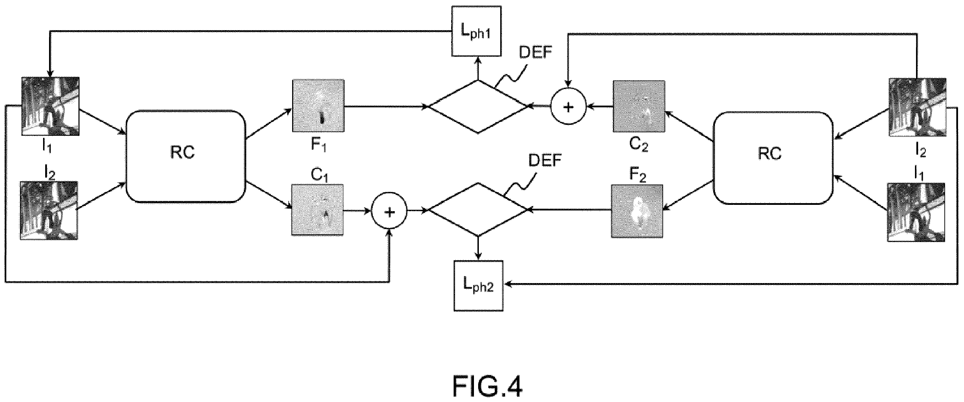

Les figures 2 et 4 représentent, sur deux schémas de principe, le fonctionnement de la méthode d'apprentissage non supervisé selon un mode de réalisation de l'invention.

La figure 2 illustre le principe du moteur d'apprentissage ou réseau d'apprentissage conjoint RC qui se compose d'un premier moteur d'apprentissage automatique du flux optique RFO de paramètres θ et d'un second moteur d'apprentissage automatique des différences d'intensité RDI de paramètres $\theta_c$. Chacun des deux moteurs d'apprentissage peut être implémenté au moyen d'un ou plusieurs réseaux de neurones, par exemple un réseau de neurones convolutionnels ou un réseau de type « transformer », par exemple en utilisant des architectures de réseaux de neurones de types RAFT, GMA ou SCV telles que décrites dans les références [2], [3] ou [4]. En particulier l'architecture de la figure 7 de l'annexe A du document [2] peut être utilisée.

En particulier, le second moteur d'apprentissage RDI peut être mis en oeuvre au moyen d'un encodeur et d'un suréchantillonneur tels que décrit dans l'architecture RAFT [2]. L'architecture peut comprendre un ou plusieurs réseaux de neurones convolutionnels.

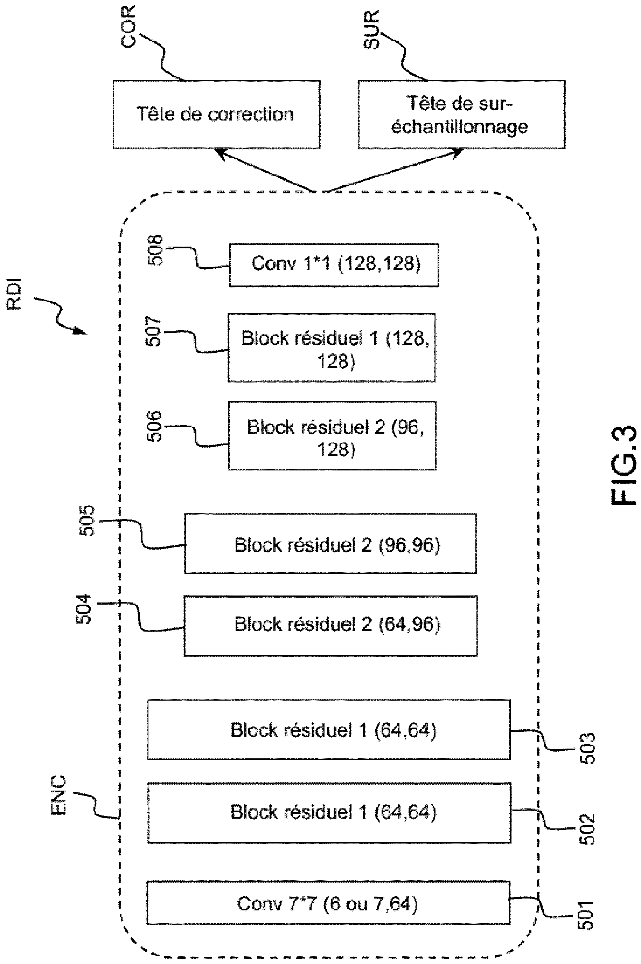

La figure 3 représente, sur un schéma, un exemple non limitatif d'architecture du second moteur d'apprentissage RDI.

Selon cet exemple, le moteur d'apprentissage RDI comporte un encodeur ENC suivi d'un module de génération d'une carte de corrections COR et d'un module de suréchantillonnage SUR.

L'encodeur ENC est composé de plusieurs couches de réseaux de neurones artificiels en série. Chaque couche de convolution est suivie d'une couche de normalisation d'instance (« instance normalization » en anglais). En entrée de l'encodeur, une première couche 501 de convolution reçoit en entrée des images concaténées à une résolution donnée HxW avec 3 canaux RGB pour la première image, 3 canaux RGB pour la seconde image et, optionnellement, 1 canal pour la carte d'occultation, soit 6 ou 7 canaux au total. Sur cet exemple, la première couche 501 utilise un noyau de convolution de taille 7x7 avec un paramètre de décalage ou « stride » en anglais égal à 2 afin d'augmenter la taille du champ récepteur des neurones des couches suivantes tout en diminuant le coût de calcul. La première couche 501 fourni 64 canaux en sortie correspondant à des caractéristiques ou « features » en anglais. Plusieurs unités résiduelles 502-507 sont ensuite disposées en série. Chaque unité résiduelle est constituée de deux couches de convolution de dimension 3x3 avec différents paramètres de décalage (ou « stride » en anglais).

Plus précisément, les unités résiduelles 502, 503, 505, 507 sont composées de deux couches de convolution utilisant un noyau de convolution de taille 3x3, un paramètre de décalage égal à 1 et autant de canaux en entrée qu'en sortie. Le nombre de canaux d'entrée et de sortie sont identifiés sur la figure 3 pour chaque unité résiduelle. Les unités 502 et 503 reçoivent 64 canaux en entrée et en produisent 64 en sortie. L'unité 505 reçoit 96 canaux en entrée et en produit 96 en sortie. L'unité 507 reçoit 128 canaux en entrée et en produit 128 en sortie. En plus, l'entrée de la première couche est sommée avec la sortie de la deuxième couche.

Les unités résiduelles 504 et 506 sont composées de deux couches de convolution utilisant un noyau de convolution de taille 3x3. La première couche utilise un paramètre de décalage égal à 2 et renvoie davantage de canaux en sortie qu'elle n'en reçoit en entrée alors que la seconde couche a un paramètre de décalage égal à 1 et autant de canaux en entrée qu'en sortie. Le nombre de canaux d'entrée et de sortie sont identifiés sur la figure 3 pour chaque unité résiduelle. L'unité 504 reçoit 64 canaux en entrée et en produit 96 en sortie. L'unité 506 reçoit 96 canaux en entrée et en produit 128 en sortie. En plus, la sortie de la deuxième couche est sommée avec l'entrée de la première couche à laquelle on a appliqué une autre couche de convolution utilisant un noyau de convolution de taille 1x1 et un paramètre de décalage égal à 2. Afin de sommer des données de même dimension, le nombre de canaux en entrée et en sortie de cette couche est le même que celui de l'unité résiduelle dans laquelle il se trouve.

L'architecture de la figure 3 permet de réduire la dimensionnalité des données en entrée ainsi coût du fait de l'application du paramètre de décalage égal à 2 pour 3 couches de convolution, diminuant ainsi le coût de calcul. De ce fait la dernière couche de convolution 508 (qui reçoit 128 canaux en entrée, produit 256 canaux en sortie et utilise un noyau de convolution de taille 1x1 et un paramètre de décalage de 1) génère des données de dimension H/8xW/8, c'est-à-dire diminuées d'un facteur 8 en hauteur et en largeur par rapport à la dimension des images d'entrée.

Pour revenir à une carte de correction d'intensité applicable à une image à la résolution HxW, un module de suréchantillonnage SUR est appliqué pour générer des coefficients de suréchantillonnage. Il est composé d'une première couche de convolution avec une fonction d'activation Relu, 256 canaux d'entrée, 256 canaux de sortie et utilisant un noyau de convolution de dimension 3x3 avec un paramètre de décalage égal à 1, suivi d'une seconde couche de convolution avec une fonction d'activation SoftMax, 256 canaux d'entrée, 8x8x9 canaux de sortie et utilisant un noyau de convolution de dimension 1x1 avec un paramètre de décalage égal à 1. Le nombre de canaux de sortie correspond aux 64 pondérations à appliquer aux valeurs des pixels de la carte de correction d'intensité dans un voisinage de taille 3x3 pixels afin de suréchantillonner chaque pixel de cette carte en 8x8 nouveaux pixels.

Le module COR permet quant à lui de générer une carte de corrections d'intensité de dimension H/8xW/8x3. Il est composé d'une première couche de convolution avec une fonction d'activation Relu, 256 canaux d'entrée, 256 canaux de sortie et utilisant un noyau de convolution de dimension 3x3 avec un paramètre de décalage égal à 1, suivi d'une seconde couche de convolution avec une fonction d'activation tangente hyperbolique, 256 canaux d'entrée, 3 canaux de sortie et utilisant un noyau de convolution de dimension 1x1 avec un paramètre de décalage égal à 1. La fonction tangente hyperbolique est choisie à la place de la fonction ReLU pour pouvoir générer des valeurs positives ou négatives de correction d'intensité dans toute la plage des valeurs d'intensité que peuvent prendre les pixels.

La sortie du module COR correspond aux valeurs de correction d'intensité pour une image RGB (3 canaux) de taille H/8xW/8. Pour obtenir les valeurs de corrections pour l'image à la dimension HxW, chaque pixel de la carte en sortie du module COR doit être transformé en 8x8 pixels. On applique pour cela à la sortie du module COR, les coefficients de pondération obtenus en sortie du module SUR. Plus précisément, chaque valeur de la carte de correction finale est égale à une somme pondérée sur un voisinage 3x3 des valeurs de la carte sous-échantillonnée par les coefficients de suréchantillonnage.

L'exemple d'architecture donnée à la figure 3 est fourni à titre illustratif et non limitatif. Par exemple, si tous les paramètres de décalage (stride) sont pris égaux à 1 dans l'encodeur, le module de suréchantillonnage SUR est rendu optionnel. De façon générale, tout modèle d'intelligence artificielle, en particulier utilisant un ou plusieurs réseaux de neurones convolutionnels ou « transformers » peut être utilisé pour implémenté les réseaux d'apprentissage RFO et RDI.

Le premier réseau d'apprentissage RFO reçoit en entrée un couple d'images $(I_1, I_2)$ composé de deux images successives d'une séquence d'images et apprend la fonction $F_1$ qui correspond au flux optique permettant de passer de $I_1$ vers $I_2$.

Le second réseau d'apprentissage RDI reçoit en entrée l'image $I_1$ et l'image reconstruite $\widehat{I_1}$ en appliquant la fonction $F_1$ estimée par le premier réseau RFO à la seconde image $I_2$ pour la déformer (via une fonction de déformation DEF) afin d'obtenir une version reconstruite de la première image. La fonction de déformation DEF consiste à déplacer les pixels de $I_2$ selon le flux optique défini par $F_1$. Optionnellement, le second réseau RDI reçoit également en entrée une carte des occultations $O_1$ qui est un masque binaire qui vaut 1 pour chaque pixel appartenant à un point d'observation qui est visible à la fois dans $I_1$ et dans $I_2$ et qui vaut 0 si il n'est visible que dans l'image $I_1$. La carte des occultations permet de prendre en compte dans l'optimisation les occultations d'un objet par un autre qui interviennent entre les deux images. Le second réseau RDI apprend la carte de corrections d'intensité $C_1$ de dimensions (H,W,C) qui contient les valeurs à appliquer pour compenser les changements d'intensité de $I_1$ vers $I_2$ pour les pixels visibles dans les deux images. Il s'agit ici d'estimer les changements d'intensité entre deux pixels correspondant aux mêmes points d'intérêt dans les deux images.

Le schéma de principe du réseau d'apprentissage conjoint RC est applicable pour estimer $F_1$ et $C_1$ dans le sens temporel direct mais aussi pour estimer $F_2$ et $C_2$ dans le sens inverse, il suffit alors d'inverser l'ordre des images $I_1, I_2$ en entrée des deux réseaux.

Une première possibilité pour calculer la fonction d'erreur photométrique consiste à estimer une erreur entre

$I_1+C_1$ et $\widehat{I_1}$ par exemple au moyen de l'équation (2) :

$$L_{ph1}(\theta, \theta_c) = \left\| O_1 \odot \rho(\widehat{I_1}, I_1 + C_1) \right\|_1 / \left\| O_1 \right\|_1 \quad (2)$$

$\theta$ sont les paramètres du premier réseau RFO,

$\theta_c$ sont les paramètres du second réseau RDI,

$\odot$ désigne l'opérateur produit terme à terme entre deux matrices encore appelé produit de Hadamard,

$\rho$ est une fonction d'erreur, par exemple une erreur quadratique moyenne ou plus avantageusement une erreur permettant de mesurer une divergence entre deux images. Par exemple, cette fonction d'erreur peut être définie par la relation suivante :

$$\rho(A, B)(p) = \left( \sum_{q \epsilon N(p)} H\{C(A(p) - A(q)) - C(B(p) - B(q))\} + \varepsilon \right)^{\alpha} \quad (3)$$

A et B sont deux images de même dimensions, p désigne la coordonnée d'un pixel, N(p) est l'ensemble des pixels voisins du pixel p.

$$H(z) = \frac{z^2}{z^2 + \varepsilon}$$

la distance de Hamming souple

$$C(z) = z / \sqrt{\epsilon + z^2}$$

$\alpha, \varepsilon, \epsilon$ sont des paramètres, par exemple égaux respectivement à $\alpha$ = 0.4, $\varepsilon$ = 0.1, $\epsilon$ = 0.81

$\| \; \|_1$ désigne la norme L1 ou erreur quadratique

En utilisant la fonction d'erreur photométrique de l'équation (2), la carte de corrections de changements d'intensité $C_1$ est utilisée pour minimiser cette fonction d'erreur $L_{ph1}$. Cependant, comme les images $I_1$ et $\widehat{I_1}$ sont fournies en entrée du second réseau RDI, celui-ci a simplement besoin d'estimer la différence entre ces deux images. Au final, cette optimisation n'est pas satisfaisante et peut conduire à une mauvaise estimation du flux optique $F_1$.

Pour améliorer ce point, il est proposé de modifier l'équation (2) en l'équation (4) :

$$L_{ph1}(\theta, \theta_c) = \left\| O_1 \odot \rho(\widehat{I_1^c}, I_1) \right\|_1 / \left\| O_1 \right\|_1 \quad (4)$$

$\widehat{I_1^c}$ est une version reconstruite de l'image $I_1$ qui est obtenue par l'opération suivante :

$$\widehat{I}_1^c = w(I_2 + C_2, F_1)$$

w est la fonction de déformation DEF qui consiste en l'opération suivante :

$w(I_2, F_1)(p) = I_2(p + F_1(p))$ si $p + F_1(p)$ est à l'intérieur des dimensions de $I_2$ et vaut (0,0,0) sinon.

Ainsi, l'équation (4) nécessite d'estimer à la fois le flux optique et la carte de changements d'intensité dans le sens temporel direct mais aussi dans le sens indirect.

Cela est illustré à la figure 4 qui montre le principe du calcul de la fonction d'erreur photométrique dans le sens temporel direct $L_{ph1}$ et inverse $L_{ph2}$.

Sur la figure 4, le réseau conjoint RC est représenté deux fois mais il correspond à un seul et même réseau, qui est celui décrit à la figure 2, mais qui est entrainé respectivement pour estimer $F_1, C_1$ d'une part et $F_2, C_2$ d'autre part.

Dans l'équation de calcul de la fonction d'erreur photométrique, $I_2$ est remplacé par $I_2 + C_2$ donc le calcul requière à la fois l'estimation du flux optique dans le sens temporel direct et dans le sens inverse.

Dans un mode de réalisation de l'invention, la fonction d'erreur photométrique $L_{ph}$ est égale à la somme des deux fonctions $L_{ph} = L_{ph1} + L_{ph2}$ mais elle peut aussi être égale à l'une ou l'autre des deux fonctions $L_{ph} = L_{ph1}$ ou $L_{ph} = L_{ph2}$.

La fonction d'erreur globale de l'équation (1) est utilisée pour estimer les paramètres des deux réseaux RFO, RDI conjointement lors d'une phase de rétro-propagation de l'erreur calculée au moyen de l'équation (1) afin de mettre à jour les poids des réseaux.

Ce processus d'entrainement n'est pas décrit ici car il fait partie des connaissances générales de l'Homme de l'art. Ce processus consiste à calculer les paramètres d'un réseau de neurones à l'aide d'un algorithme d'optimisation comprenant une phase d'inférence au cours de laquelle les données d'entrée sont propagées dans le réseau pour calculer la fonction d'erreur puis, dans une phase de rétro-propagation, l'erreur est rétropropagée afin de calculer les poids de chaque couche du réseau de neurones au moyen d'un algorithme de descente du gradient.

La solution proposée par l'invention permet d'améliorer la prédiction du flux optique car l'estimation $\widehat{I}_2$ est détachée du graphe de calcul du modèle $\psi(\theta)$. dans les entrées du second réseau RDI. Ainsi, l'optimisation du modèle $\phi(\theta_c)$ n'impacte pas celle du modèle de flux optique $\psi(\theta)$.

Plus précisément, $\widehat{I}_2$ dépend de $F_1$ donc par construction, $\widehat{I}_2$ est rattaché au graphe de calcul de $\psi(\theta)$. Cela implique que les erreurs de la fonction de cout photométrique liée à $C_2$ seront rétro-propagées dans les estimations de $\psi(\theta)$ et $\phi(\theta_c)$ Autrement dit pour améliorer les prédictions du second réseau RDI, les paramètres $\theta$ du premier réseau RFO pourront être modifiés. Ce n'est pas le comportement souhaité puisque le second réseau RDI a pour objectif de prendre en compte les erreurs de reconstruction qui ne sont pas prises en compte par l'estimation du flux optique (c'est à dire les changements d'intensité lumineuse). L'hypothèse sous-jacente est que les corrections sont estimées à partir d'un flux correctement estimé. Les erreurs du correcteur ne doivent pas être rétro-propagées dans le premier réseau RFO (car ses prédictions sont bonnes par hypothèse). Afin d'empêcher cette rétro-propagation, $\widehat{I}_2$ doit être détachée du graphe de calcul du modèle $\psi(\theta)$.

L'erreur photométrique calculée est rétro-propagée à partir des estimées du flux optique $F_1$ et des corrections $C_2$ mais pas du flux optique $F_2$. Elle s'applique pour chaque prédiction du premier réseau de calcul du flux optique RFO. Les changements d'intensité sont par contre estimés par le second réseau RDI à partir de la dernière prédiction de flux optique fournie par le premier réseau RFO.

Dans une variante de réalisation de l'invention, on propose une variante de calcul de la fonction d'erreur photométrique permettant encore d'améliorer les estimations.

Dans le cas d'une erreur d'estimation du flux optique $F_2$, reconstruire l'image $I_2$ en appliquant le flux optique $F_2$ à l'image $I_1$ peut engendrer des erreurs de reconstruction, même dans les parties non occultées de l'image. Ainsi dans une telle situation, des pixels qui ne correspondent pas aux mêmes points d'intérêts peuvent avoir les mêmes coordonnées dans $I_2$ et $\widehat{I}_2$. Ces erreurs de reconstruction peuvent ensuite impacter l'estimation de la carte de correction d'intensités $C_2$.

Afin de minimiser l'impact de telles erreurs dans la fonction d'erreur photométrique, il est proposé une modification à cette dernière.

Selon cette variante proposée, seuls les pixels qui minimisent une erreur de reconstruction ρ' sont conservés. Plus précisément la fonction d'erreur photométrique est séparée en deux fonctions respectivement spécifiquement dédiées à l'optimisation des paramètres du premier réseau RFO et du second réseau RDI.

$$L_{ph1}(\theta, \theta_c) = L_{ph1}^{f}(\theta) + \gamma_{ph}^{c} L_{ph1}^{c}(\theta_c) \quad (5)$$

$$L_{ph1}^{f}(\theta) = \left\| O_1 \odot \rho(M_1 \odot \widehat{I_1^c} + \overline{M_1} \odot \widehat{I_1}, I_1) \right\|_1 / \|O_1\|_1$$

$M_1$ est une matrice de même dimensions que $I_1$ qui vaut 1 pour chaque pixel qui vérifie $\rho'(\widehat{I_1^c}, I_1) \leq \rho'(\widehat{I_1}, I_1)$ et 0 sinon. Et $\overline{M_1}$ est le complément de $M_1$.

Autrement dit, le premier terme $L_{ph1}^{f}(\theta)$ dédié à l'optimisation du premier réseau RFO calcule une erreur entre $I_1$ et une combinaison entre $\widehat{I_1^c}$ et $\widehat{I_1}$.

$$L_{ph1}^{c}(\theta_c) = \left\| O_1 \odot \rho'(\widehat{I_1^c}, I_1) \right\|_1 / \|O_1\|_1$$

ρ' est une fonction d'erreur qui est, par exemple, égale à la norme $L_1$.

L'invention permet de réduire les erreurs d'estimation du flux optique par rapport aux méthodes de l'art antérieur basées sur l'emploi d'une fonction d'erreur photométrique et favorise ainsi un meilleur apprentissage. En effet, l'invention estime les changements d'intensité entre images successives ce qui permet d'éviter les erreurs dans l'estimation du flux optique qui seraient liés à de tels changements.

L'invention peut être mise en oeuvre pour tout type d'architecture de réseau de neurones apte à estimer une tâche d'intérêt sans nécessité de modifier son architecture mais uniquement le calcul de la fonction d'erreur et l'introduction d'un second modèle d'apprentissage des changements d'intensité.

L'invention nécessite l'entrainement d'un second réseau de neurones RDI mais ce dernier n'est utilisé que pour l'entrainement du premier réseau RFO. Une fois que la fonction de flux optique est apprise, le premier réseau RFO peut être utilisé seul, lors d'une phase d'inférence, pour estimer un flux optique sur une séquence vidéo d'intérêt. La complexité d'implémentation en termes de cout de calcul reste donc identique pour la phase d'inférence.

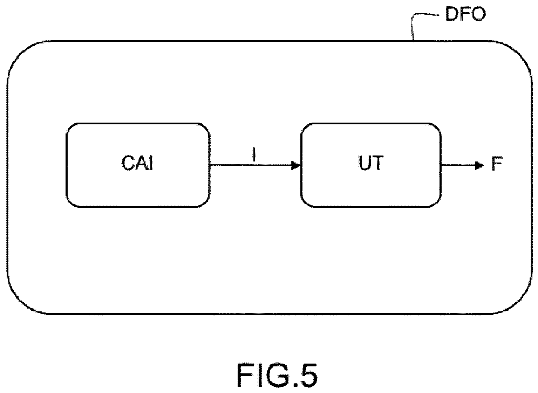

La figure 5 représente, sur un schéma simplifié, un dispositif de mesure de flux optique DFO comprenant un capteur d'acquisition d'images CAI, par exemple une caméra qui capture une séquence d'images I et la fournit en entrée d'une unité de traitement UT qui est configurée pour exécuter la méthode selon l'un quelconque des modes de réalisation de l'invention afin d'estimer un flux optique F.

L'invention peut être mise en oeuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Le réseau de neurones conjoint RC peut être implémenté sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Références

[1] F. Stein, «Efficient computation of optical flow using the census transform.» *Joint Pattern Recognition Symposium,* 2004.

[2] Zachary Teed and Jia Deng. Raft: Récurrent all-pairs field transforms for optical flow. In ECCV, 2020

[3] Shihao Jiang et al, Learning to estimate hidden motions with global motion aggregation. In ICCV,2021

[4] Shihao Jiang et al, Learning optical flow from a few matches. In CVPR, 2021

[5] Stone, Austin, et al. "SMURF: Self-teaching multi-frame unsupervised RAFT with full-image warping." Proceedings of the IEEE/CVF Conférence on Computer Vision and Pattern Recognition. 2021

## Revendications

1. Méthode, mise en oeuvre par ordinateur, d'apprentissage non supervisé d'un modèle de flux optique à partir d'une séquence d'images, la méthode comprenant l'apprentissage conjoint d'un premier modèle d'apprentissage automatique (RFO) configuré pour estimer le flux optique $F_1,F_2$ entre deux images successives et d'un second modèle d'apprentissage automatique (RDI) configuré pour estimer une différence d'intensité lumineuse $C_1,C_2$ entre les pixels correspondants des deux images successives, l'apprentissage conjoint étant réalisé par optimisation d'au moins une première fonction de cout $L_{ph1}$ caractéristique d'une erreur entre la première image $I_1$ d'un couple d'images successives $I_1,I_2$ et une version reconstituée $\widehat{I_1^{\tilde{c}}}$ de la première image $I_1$ obtenue en :

   - Appliquant la différence d'intensité lumineuse $C_2$ estimée entre la seconde image $I_2$ et la première image $I_1$, à la seconde image $I_2$, de manière à obtenir une seconde image $I_2^{c}$ compensée de la différence d'intensité lumineuse $C_2$,
   - Appliquant l'estimée du flux optique $F_1$ entre la première image $I_1$ et la seconde image $I_2$ à la seconde image $I_2^{c}$ compensée, de manière à obtenir la version reconstituée $\widehat{I_1^{\tilde{c}}}$ de la première image $I_1$.

2. Méthode d'apprentissage non supervisé d'un modèle de flux optique selon la revendication 1 dans laquelle l'apprentissage conjoint est réalisé par optimisation d'une première fonction de cout $L_{ph1}$ caractéristique d'une erreur entre la première image $I_1$ d'un couple d'images successives $I_1,I_2$ et une version reconstituée $\widehat{I_1^{\tilde{c}}}$ de la première image $I_1$ et d'une seconde fonction de cout $L_{ph2}$ caractéristique d'une erreur entre la seconde image $I_2$ et une version

reconstituée $\widehat{I}_2^c$ de la seconde image $I_2$.

3. Méthode d'apprentissage non supervisé d'un modèle de flux optique selon l'une quelconque des revendications précédentes dans laquelle le second modèle d'apprentissage automatique (RDI) reçoit en entrée l'une des images du couple de deux images successives et une version estimée de ladite image en appliquant l'estimée du flux optique à l'autre image dudit couple.

4. Méthode d'apprentissage non supervisé d'un modèle de flux optique selon l'une quelconque des revendications précédentes dans laquelle le second modèle d'apprentissage automatique (RDI) reçoit en entrée une carte d'occlusions $O_1, O_2$ identifiant, pour chaque image du couple d'images successives, les pixels également visibles dans l'autre image dudit couple et l'au moins une première fonction de coût est pondérée par la carte d'occlusions.

5. Méthode d'apprentissage non supervisé d'un modèle de flux optique selon l'une quelconque des revendications précédentes dans laquelle l'au moins une première fonction de coût $L_{ph1}$ est décomposée en un premier terme $L^f_{ph1}$ spécifiquement dédié à l'optimisation du premier modèle d'apprentissage automatique (RFO) du flux optique et d'un second terme $L^c_{ph1}$ spécifiquement dédié à l'optimisation du second modèle d'apprentissage automatique (RDI) de la différence d'intensité lumineuse,

- le premier terme $L^f_{ph1}$ étant caractéristique d'une erreur entre la première image $I_1$ d'un couple d'images successives $I_1, I_2$ et une combinaison de la version reconstituée $\widehat{I}_1^c$ de la première image $I_1$ et d'une version estimée $\widehat{I}_1$ de la première image en appliquant l'estimée du flux optique F1 à la seconde image $I_2$,

- ladite combinaison étant obtenue en sélectionnant, pour chaque pixel, celui de la version reconstituée $\widehat{I}_1^c$ et de la version estimée $\widehat{I}_1$ qui est le plus proche de la première image $I_1$,

- le second terme $L^c_{ph1}$ étant caractéristique d'une erreur entre la première image $I_1$ et la version reconstituée $\widehat{I}_1^c$ de la première image $I_1$.

6. Méthode d'apprentissage non supervisé d'un modèle de flux optique selon l'une quelconque des revendications précédentes dans laquelle le premier modèle d'apprentissage automatique (RFO) et/ou le second modèle d'apprentissage automatique (RDI) consistent en au moins un réseau de neurones convolutionnel.

7. Programme d'ordinateur comportant des instructions pour l'exécution de la méthode selon l'une quelconque des revendications 1 à 6, lorsque le programme est exécuté par un processeur.

8. Support d'enregistrement lisible par un processeur sur lequel est enregistré un programme comportant des instructions pour l'exécution de la méthode selon l'une quelconque des revendications 1 à 6, lorsque le programme est exécuté par un processeur.

9. Dispositif de mesure du flux optique (DFO) à partir d'une séquence d'images comprenant un capteur d'acquisition d'images (CAI) et une unité de traitement (UT) configurée pour mettre en oeuvre le modèle de flux optique estimé au moyen des étapes de la méthode selon l'une quelconque des revendications 1 à 6 pour une séquence d'images acquise par ledit capteur.

FIG.1

FIG.2

FIG.3

FIG.4

FIG.5

**Europäisches Patentamt**
**European Patent Office**
**Office européen des brevets**

# RAPPORT DE RECHERCHE EUROPEENNE

Numéro de la demande

**EP 23 21 7075**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/375073 A1 (VOIGT INGMAR [US] ET AL) 24 novembre 2022 (2022-11-24) | 1,2,6-9 | INV. G06T7/269 |
| A | * abrégé * <br> * figure 7 * <br> * alinéas [0031], [0036], [0041], [0047], [0095] - [0105] * <br> * revendications 1,5,8 * <br> ----- | 3-5 | |
| A | US 2022/101537 A1 (SUN SHANHUI [US] ET AL) 31 mars 2022 (2022-03-31) * le document en entier * <br> ----- | 1-9 | |
| A | LIU PENGPENG ET AL: "SelFlow: Self-Supervised Learning of Optical Flow", 2019 IEEE/CVF CONFERENCE ON COMPUTER VISION AND PATTERN RECOGNITION (CVPR), IEEE, 15 juin 2019 (2019-06-15), pages 4566-4575, XP033686895, DOI: 10.1109/CVPR.2019.00470 * le document en entier * <br> ----- | 1-9 | **DOMAINES TECHNIQUES RECHERCHES (IPC)** <br><br> G06T |

Le présent rapport a été établi pour toutes les revendications

| Lieu de la recherche | Date d'achèvement de la recherche | Examinateur |
|---|---|---|
| Munich | 15 avril 2024 | Eveno, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**EP 4 386 673 A1**

## ANNEXE AU RAPPORT DE RECHERCHE EUROPEENNE
## RELATIF A LA DEMANDE DE BREVET EUROPEEN NO.

EP 23 21 7075

15-04-2024

| Document brevet cité au rapport de recherche | Date de publication | Membre(s) de la famille de brevet(s) | | Date de publication |
|---|---|---|---|---|
| US 2022375073 A1 | 24-11-2022 | EP | 4092621 A1 | 23-11-2022 |
| | | US | 2022375073 A1 | 24-11-2022 |
| US 2022101537 A1 | 31-03-2022 | CN | 113781517 A | 10-12-2021 |
| | | US | 2022101537 A1 | 31-03-2022 |

EPO FORM P0460